# EUROPÄISCHE PATENTANMELDUNG

(11) **EP 3 881 966 A1**
(43) Veröffentlichungstag der Anmeldung: **22.09.2021**
(21) Anmeldenummer: 21160708.0
(22) Anmeldetag: 04.03.2021
(51) Int. Cl.: B23Q 1/70, B23Q 11/04, B23Q 17/22

(54) **SPINDELVORRICHTUNG MIT ÜBERLASTSCHUTZ**

(30) Priorität: 16.03.2020 DE 102020203327
(71) Anmelder: Deckel Maho Seebach GmbH, 99846 Seebach (DE)
(72) Erfinder: KÜMMEL, Stephan, 99817 Eisenach (DE); BAECHLER, Cindel, 99880 Waltershausen (OT Schmerbach) (DE); SCHÄFER, Hagen, 36433 Bad Salzungen (DE)
(74) Vertreter: MERH-IP Matias Erny Reichl Hoffmann Patentanwälte PartG mbB

(57) **Zusammenfassung**

Die vorliegende Erfindung betrifft eine Spindelvorrichtung 1 mit einem Gehäuse 2 zum Einsatz an einer Werkzeugmaschine 100, die eine Schnittstelle zum Einspannen der Spindelvorrichtung 1 an der Werkzeugmaschine 100, eine im Gehäuse 2 angeordnete Spindelwelle 3 zum Antreiben eines an der Spindelvorrichtung 1 eingespannten Werkzeugs und /oder Werkstücks, und eine zwischen dem Gehäuse 2 und der Spindelwelle 3 ausgebildete Zwischenkammer 10 umfasst. Ferner umfasst die Spindelvorrichtung 1 eine in der Zwischenkammer 10 angeordnete Sensoreinheit, die eingerichtet ist, um einen Volumenstrom eines in der Zwischenkammer 10 der Spindelvorrichtung 1 zugeführten Mediums zu erfassen, und eine Änderung des Volumenstroms des Mediums in der Zwischenkammer 10 zurÜberwachung vor Spindel-und/ oder Werkzeugbeschädigungen bzw. Werkstückbeschädigung zu detektieren, wenn die Spindelwelle 3 durch eine auf das Werkzeug bzw. Werkstück und/oder der Spindelvorrichtung 1 wirkende Kraft verschoben wird.

## Beschreibung

Die vorliegende Erfindung betrifft eine Spindelvorrichtung zum Einsatz an einer Werkzeugmaschine, die mit einem Überlastschutz vorgesehen ist.

### Hintergrund

Im Stand der Technik sind Spindelvorrichtungen zum Einsatz an Werkzeugmaschinen bekannt, bei denen eine Spindelwelle der Spindelvorrichtung bei Lasten überein Federsystem abgesichert ist.

Bei derartigen Spindelvorrichtungen hat es sich als unpraktisch erwiesen, dass bei in der Spindelvorrichtung eingespannten Werkzeugen Überlastzustände auftreten, die einem Federsystem entgegenwirken. Bei derartigen Überlastzuständen laufen Vorderlagerungen der Spindelvorrichtung ohne eine Vorspannung, sodass die Lager bei einem andauernden Lastfall geschädigt werden können. Bei Spindelvorrichtung mit eingespannten Schaftfräsern, die zunehmend verbreitet sind, können bereits bei mittleren Spindelleistung Überlasten entstehen.

Aus der DE 10 2018 201 427.2 ist eine Spindelvorrichtung bekannt, in der zur Überwachung von Überbelastung Kraftsensoren an der Spindelvorrichtung angebracht sind, die eine Kraftverteilung an der Spindelvorrichtung ermitteln.

Bei einer solchen Spindelvorrichtung hat es sich als ungünstig erwiesen, dass die mit Kraftsensoren ausgestattete Spindelvorrichtung einen sehr aufwändigen Aufbau hat, der zudem kostspielig ist.

Ausgehend von den Spindelvorrichtungen des Stands der Technik ist es eine Aufgabe der Erfindung, den Aufbau einer Spindelvorrichtung zum Einsatz an einer Werkzeugmaschine derart zu optimieren, dass ein kostengünstiger Aufbau einer Spindelvorrichtung mit Überlastschutz erreicht wird.

### Zusammenfassung der Erfindung

Zur Lösung der vorstehend genannten Aufgabe wird erfindungsgemäß eine Spindelvorrichtung gemäß Anspruch 1 vorgeschlagen. Abhängige Ansprüche betreffen bevorzugte und beispielhafte Ausführungsformen der Erfindung.

Gemäß der vorliegenden Erfindung wird eine Spindelvorrichtung mit einem Gehäuse zum Einsatz an einer Werkzeugmaschine vorgeschlagen, die eine Schnittstelle zum Einspannen der Spindelvorrichtung an der Werkzeugmaschine, eine im Gehäuse angeordnete Spindelwelle zum Antreiben eines an der Spindelvorrichtung eingespannten Werkzeugs und/oder Werkstücks, und eine zwischen dem Gehäuse und der Spindelwelle ausgebildete Zwischenkammer umfasst.

Ferner umfasst die Spindelvorrichtung eine in der Zwischenkammer angeordnete Sensoreinheit, die eingerichtet ist, einen Volumenstrom eines in der Zwischenkammer der Spindelvorrichtung zugeführten Mediums zu erfassen, und eine Änderung des Volumenstroms des Mediums in der Zwischenkammer zur Überwachung vor Spindel- und/ oder Werkzeugbeschädigungen bzw. Werkstückbeschädigung zu detektieren, wenn die Spindelwelle durch eine auf das Werkzeug bzw. Werkstück und/ oder der Spindelvorrichtung wirkende Kraft verschoben wird.

Dies hat den Vorteil, dass durch Erfassung des Volumenstroms des Mediums Überlasten an Werkzeugen bzw. Werkstücken, die an der Spindelvorrichtung eingespannt sind, frühzeitig über die Sensoreinheit detektiert werden und somit verhindert werden können.

Ferner hat die erfindungsgemäße Spindelvorrichtung den Vorteil, dass ein möglichst einfacher Aufbau realisiert wurde, mit der eine Echtzeitüberwachung ermöglicht wird und der Überlastungsschutz ohne eine Prozessunterbrechung durchgeführt werden kann

In zweckmäßigen Ausführungsbeispielen umfasst die Spindelvorrichtung im Gehäuse angeordnete durch mindestens ein Schwingungselement vorgespannte Lager.

Dies hat den Vorteil, dass die Lager derart ausgebildet sind, dass die Spindelwelle reibungslos angetrieben werden kann. Bewegt sich die Spindelwelle in Folge von Zugkräften, die auf die in der Spindelvorrichtung eingespannten Werkzeuge oder Werkstücke wirken in Richtung der Lager, verhindert das Schwingungselement einen direkten Kontakt zwischen minimiert bzw. verhindert. Zudem wird durch das Schwingungselement eine gleichbleibende Vorspannung der Lager gewährleistet.

In zweckmäßigen Ausführungsbeispielen umfasst die Spindelvorrichtung in einem ersten Abschnitt des Gehäuses angeordnete durch ein erstes Schwingungselement vorgespannte Vorderlager und in einem zweiten Abschnitt des Gehäuses angeordnete durch ein zweites Schwingungselement vorgespannte Hinterlager.

Dies hat den Vorteil, dass eine verbesserte und gleichmäßige Lagerung in der Spindelvorrichtung realisiert wird. Aufgrund des Aufbaus mittels Vorder- und Hinterlager werden Unregelmäßigkeiten der Lagerung durch die Aufteilung der Lager verhindert.

In zweckmäßigen Ausführungsbeispielen umfasst die Spindelvorrichtung ein zwischen dem Schwingungselement und der Spindelwelle angeordnetes Schiebeelement, das eingerichtet ist, eine Federkraft des Schwingungselements zur Vorspannung der Hinterlager auf die Hinterlager zu übertragen.

Dies hat den Vorteil, dass die Vorspannung des Schwingungselements gleichmäßig mittels des Schiebeelements auf die Hinterlager übertragen wird. Eine zu hohe Druckkraft auf das Schwingungselement wird durch die gleichmäßige Verteilung der Kräfte mittels des Schiebeelements auf das Schwingungselement verhindert. Daher wird die Übertragung der Federkraft des Schwingungselements optimiert. Zudem ist wird durch die gleichmäßige Verteilung der Federkraft eine übermäßige Belastung einzelner Lager verhindert.

In zweckmäßigen Ausführungsbeispielen ist das Schiebeelement derart ausgebildet, dass die Hinterlager mindestens teilweise zum Schutz der Hinterlager von dem Schiebeelement umschlossen sind.

Dies hat den Vorteil, dass die Hinterlager derart geschützt sind, dass die Lebensdauer der Lager verlängert wird und Wartungen der Spindelvorrichtung aufgrund von Lagerwechsel reduziert werden.

In zweckmäßigen Ausführungsbeispielen ist die Spindelvorrichtung derart ausgebildet, dass, wenn bei der Bearbeitung Zugkräfte auf das eingespannte Werkzeug bzw. Werkstück wirken und sich die Spindelwelle in Richtung der Vorderlager bewegt, das Schiebeelement in Richtung der Vorderlager bewegt wird und die Zwischenkammer ein kleineres Volumen als im vorgespannten Zustand einnimmt.

Dies hat den Vorteil, dass der Aufbau der Spindelvorrichtung kompakt gehalten wird und dabei die Ermittlung von Überlasten kostengünstig realisiert wird.

In zweckmäßigen Ausführungsbeispielen ist die Sensoreinheit derart eingerichtet, den Volumenstrom des der Zwischenkammer der Spindelvorrichtung zugeführten Mediums durch eine Durchflussmessung zu erfassen.

Dies hat den Vorteil, dass die Funktionalität der Spindelvorrichtung verbessert bzw. zumindest gleich bleibend ist, wobei der Aufbau zur Detektion von Überlasten vereinfacht wurde.

In zweckmäßigen Ausführungsbeispielen umfasst die Spindelvorrichtung weiterhin eine Düse mit Drosselgeometrie, wobei das Medium durch eine im Gehäuse angeordneten Leitung zur Düse strömt und die Sensoreinheit zur Durchflussmessung oder zur Messung eines an der Düse anliegenden Staudrucks des der Zwischenkammer der Spindelvorrichtung zugeführten Mediums eingerichtet ist und damit auf den Volumenstrom rückschließt.

Dies hat den Vorteil, dass das Medium über die Leitung und der Düse mit Drosselgeometrie gleichmäßig und reguliert in die Zwischenkammer zugeführt wird und der Volumenstrom mittels der Sensoreinheit exakt erfasst und detektiert werden kann. Zusätzlich wird der Aufbau der Spindelvorrichtung kompakt gehalten und im Falle einer Ausführung der Sensoreinheit zur Messung des Staudrucks können im Vergleich zu Durchflussmessgeräten eine kostengünstigere Staudruckmessung realisiert werden.

In zweckmäßigen Ausführungsbeispielen ist die Sensoreinheit derart eingerichtet, dass eine Sicherheitsmaßnahme zum Schutz vor Spindel- und/oder Werkzeugbeschädigungen durchgeführt wird, wenn der Volumenstrom des Mediums einen vorbestimmten kritischen Wert erreicht.

Dies hat den Vorteil, dass Überlasten an der Spindelvorrichtung effizient verhindert werden und die Sicherheitsmaßnahme zum Schutz der Spindelvorrichtung führt.

In zweckmäßigen Ausführungsbeispielen ist die Sensoreinheit derart eingerichtet, dass ein erstes Signal detektiert wird, wenn der gemessene Volumenstrom des Mediums einen Wert annimmt, der in einem ersten Wertebereich liegt, ein zweites Signal detektiert wird, wenn der gemessene Volumenstrom des Mediums einen Wert annimmt, der in einem zweiten Wertebereich liegt, und ein drittes Signal detektiert wird, wenn der gemessene Volumenstrom des Mediums einen Wert annimmt, der in einem dritten Wertebereich liegt, wobei der dritte Wertebereich in einem Bereich liegt, der kleiner als der erste und zweite Wertbereich ist, und der zweite Wertebereich in einem Bereich liegt, der kleiner als der erste Wertebereich ist.

Dies hat den Vorteil, dass die Funktionalität der Sensoreinheit derart verbessert wird, das verschiedene Signal detektiert und einem Wertebereich zugeordnet werden können, sodass die Genauigkeit der Messung verbessert wird.

In zweckmäßigen Ausführungsbeispielen ist die Sensoreinheit derart eingerichtet, dass die Bearbeitung mittels der Werkzeugmaschine durchgeführt wird, wenn die Sensoreinheit das erste Signal detektiert.

Dies hat den Vorteil, dass ein Benutzer durch das Signal darauf hingewiesen wird, dass die an der Spindelvorrichtungen eingespannten Werkzeuge bzw. Werkstücke eine Last auf die Spindelvorrichtung ausüben, die für die Spindelvorrichtung nicht kritisch ist, sodass die Spindelvorrichtung einen Bearbeitungsprozess ohne Unterbrechung weiter durchführen kann.

In zweckmäßigen Ausführungsbeispielen ist die Sensoreinheit derart eingerichtet, dass als eine Sicherheitsmaßnahme zum Schutz vor Spindel- und/oder Werkzeugbeschädigungen eine Warnung an der Werkzeugmaschine erscheint, wenn die Sensoreinheit das zweite Signal detektiert.

Dies hat den Vorteil, dass bereits vor entstehenden Überlasten eine Warnung an den Benutzer abgesendet wird, sodass eine Vorsorge zum Schutz derSpindelvorrichtung getroffen werden kann. Der Benutzer kann somit frühzeitig auf Zugkräfte im Bearbeitungsprozess reagieren und die Spindelvorrichtung vor Überlasten schützen.

In zweckmäßigen Ausführungsbeispielen ist die Sensoreinheit derart eingerichtet, dass als eine Sicherheitsmaßnahme zum Schutz vor Spindel- und/oder Werkzeugbeschädigungen ein Abschalten der Werkzeugmaschine durchgeführt wird, wenn die Sensoreinheit das dritte Signal detektiert.

Dies hat den Vorteil, dass bei einer Überlast ein sofortiges Abschalten durchgeführt wird, sodass die Spindelvorrichtung vor möglichen Schäden geschützt wird. Es wird somit verhindert, dass zu große Zugkräfte, die zu Überbelastungen führen, auf die Spindelvorrichtung wirken.

Gemäß der vorliegenden Erfindung wird ein System vorgeschlagen, das eine numerisch gesteuerte Werkzeugmaschine, und eine an der Werkzeugmaschine aufgenommene Spindelvorrichtung gemäß einer der vorstehenden zweckmäßigen Ausführungsbeispiele umfasst.

In zweckmäßigen Ausführungsbeispielen umfasst die Werkzeugmaschine eine Steuereinrichtung, die dazu eingerichtet ist, eine Bewegung der Spindelvorrichtung zu steuern, und die Spindelvorrichtung weist eine Übertragungseinheit zum Übertragen von Signalen an die Steuereinrichtung der Werkzeugmaschine auf.

Dies hat den Vorteil, dass die Spindelvorrichtung mit der Werkzeugmaschine kommunizieren kann, um Überbelastung zu verhindern. Detektierte Signale können schnell über die Übertragungseinheit der Spindelvorrichtung an die Werkzeugmaschine übertragen werden und die Werkzeugmaschine kann die detektierten Signale empfangen und über die Steuereinrichtung verarbeiten, wodurch die Werkzeugmaschine auf Überlasten reagieren und die Bewegung bzw. Vorschubbewegung der Spindelvorrichtung gesteuert werden kann.

In zweckmäßigen Ausführungsbeispielen ist die Übertragungseinheit dazu eingerichtet, ein Regelungssignal an die Steuereinrichtung der Werkzeugmaschine zu übertragen, wobei das Signal die mittels der Sensoreinheit detektierte Änderung des Volumenstroms des Mediums angibt.

In zweckmäßigen Ausführungsbeispielen ist die Steuereinrichtung der Werkzeugmaschine dazu eingerichtet, eine Bewegung der an der Werkzeugmaschine aufgenommen Spindelvorrichtung auf Grundlage des von der Übertragungseinheit der Spindelvorrichtung empfangenen Regelungssignals zu steuern bzw. zu regeln.

Dies hat den Vorteil, dass die Werkzeugmaschine mit der Spindelvorrichtung ein System bildet, in der eine einfache und wirtschaftliche Echtzeitüberwachung von Überlasten ermöglicht wird. Die Spindelvorrichtung wird vor mechanischer Überlastung geschützt, die bei hohen Prozesskräfte bei radialen bzw. axialen Prozessen wirken. Die von der Sensoreinheit detektierten Signale, die die Belastungen an der Spindelvorrichtung darstellen, können visuell an der Steuereinrichtung angezeigt werden. Ferner kann die Vorschubbewegung der Werkzeugmaschine reguliert werden, um eine Überbelastung auszuschließen und Lagerschäden an der Spindelvorrichtung aufgrund von Überbelastung werden somit verhindert.

Durch die erfindungsgemäße Spindelvorrichtung und das erfindungsgemäße System aus Werkzeugmaschine und Spindelvorrichtung wird ein wirtschaftlicher und funktionsintegrierter Überlastschutz realisiert.

### Kurzbeschreibung der Figuren

**Fig. 1** zeigt ein Ausführungsbeispiel einer Spindelvorrichtung mit Überlastschutz gemäß der Erfindung.
**Fig. 2** zeigt eine vergrößerte Ansicht eines Abschnitts der Spindelvorrichtung mit Überlastschutz aus Fig. 1.
**Fig. 3** zeigt ein Diagramm zu dem Ausführungsbeispiel der Spindelvorrichtung gemäß der Erfindung.
**Fig. 4** zeigt eine numerisch gesteuerte Werkzeugmaschine mit einer erfindungsgemäßen Spindelvorrichtung.

### Detaillierte Beschreibung der Figuren und bevorzugter Ausführungsbeispiele

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keiner Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

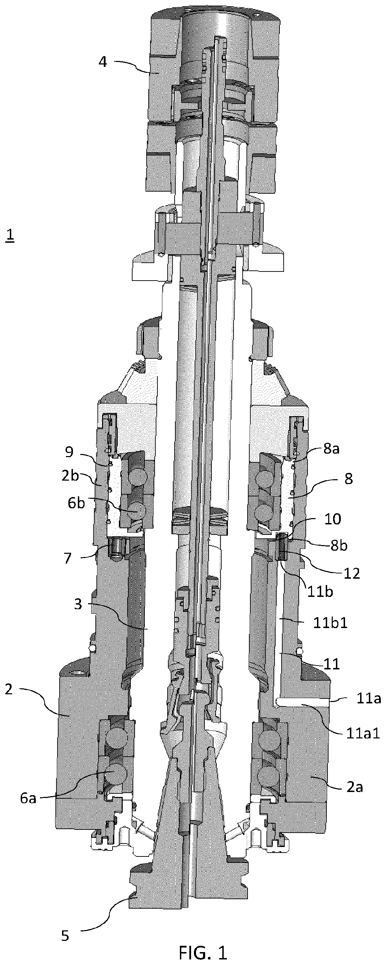

**Fig. 1** zeigt ein Ausführungsbeispiel einer Spindelvorrichtung 1 gemäß der Erfindung. Die Spindelvorrichtung 1 umfasst ein Gehäuse 2 und eine im Gehäuse 2 angeordnete Spindelwelle 3. Die Spindelvorrichtung 1 weist an einer Endseite des Gehäuses 2 eine Drehdurchführung 4 zur inneren Zufuhr eines Kühlschmierstoffes auf.

Die Spindelvorrichtung 1 umfasst eine Zugstange 5 mittels der Werkzeuge oder Werkstücke in die Spindelvorrichtung 1 eingespannt werden können. Die Zugstange 5 ist innerhalb des Gehäuses 2 innerhalb der Spindelwelle 3 angeordnet. Die Zugstange 5 ist derart ausgebildet, dass diese in axialer Richtung bewegbar ist, sodass Werkzeuge bzw. Werkstücke über die Bewegung der Zugstange 5 in axialer Richtung in die Spindelvorrichtung 1 eingespannt oder gelöst werden.

Zwischen dem Gehäuse 2 und der Spindelwelle 3 sind in einem ersten Abschnitt 2a des Gehäuses 2 Vorderlager6a und in einem zweiten Abschnitt 2b Hinterlager 6b zum Lagern derSpindelwelle 3 angeordnet. Die Vorderlager6a und die Hinterlager6b sind beispielsweise als Lagerpakete ausgebildet und sind über Schwingungselemente vorgespannt. Die Vorderlager 6a und Hinterlager 6b sind über die Schwingungselemente derart vorgespannt, dass die Spindelwelle 3 bei Zugbelastungen, diese möglichst effizient über die Vorder- und/oder Hinterlager 6a, 6b auf das Gehäuse 2 überträgt.

Die Hinterlager 6b sind über ein Schwingungselement 7 vorgespannt, um die Hinterlager 6b bei einer Bearbeitung mit der Werkzeugmaschine von Zugbelastungen zu schützen. Das Schwingungselement 7 ist im zweiten Abschnitt 2b des Gehäuses 2 an dem Gehäuse 2 angeordnet. Das Schwingungselement 7 ist beispielweise als eine Druckfeder ausgebildet.

Im zweiten Abschnitt 2b des Gehäuses 2 ist ein Schiebeelement 8 angeordnet, das einen zylinderförmigen Hauptabschnitt 8a und ein Endabschnitt 8b umfasst, wobei der Endabschnitt 8b breiter als der Hauptabschnitt 8a ausgebildet ist, sodass das Schiebeelement 8 im Querschnitt L-förmig ausgebildet ist. Eine äußere Umfangsfläche des Schiebeelements 8 grenzt an dem Gehäuse 2 und eine Außenseite des Endabschnitt 8b des Schiebeelements 8 ist mit dem Schwingungselement 7 in Kontakt. Die Hinterlager 6b sind innerhalb des Schiebeelements 8 derart angeordnet, dass das Schiebeelement 8 L-förmig die Hinterlager 6b einrahmt und die Hinterlager 6b mindestens teilweise durch das Schiebeelement 8 umschlossen werden. Das Schiebeelement 8 ist derart ausgebildet, dass das Schwingungselement 7 gegen das Schiebeelement 8 drückt und die Federkraft zur Vorspannung derHinterlager6b auf die Hinterlager6b durch das Schiebeelement 8 ausgeübt wird. Das Schiebeelement 8 ist über Abdichtungen 9 gegenüberdem Gehäuse 2 abgedichtet.

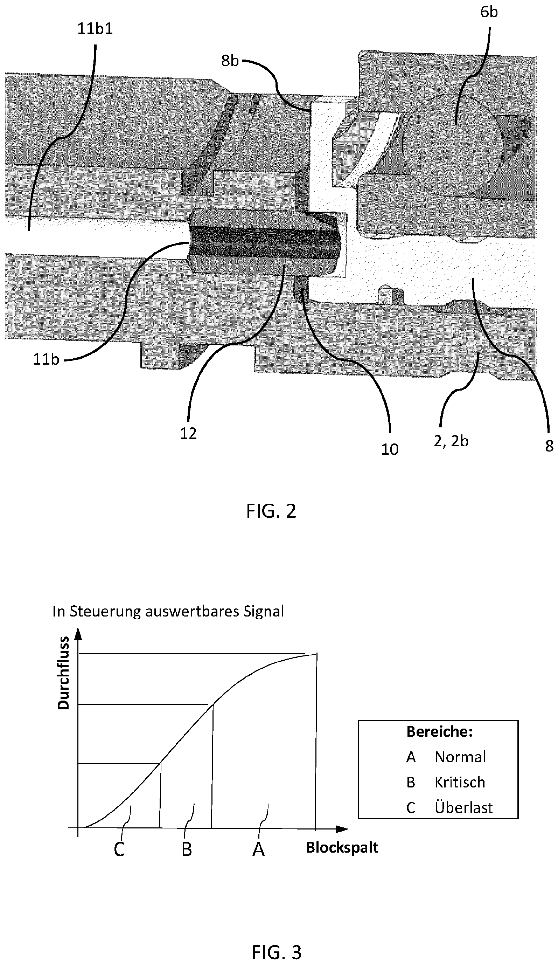

Zwischen dem Gehäuse 2 und dem Endabschnitt 8b des Schiebeelements 8 umfasst die Spindelvorrichtung 1 eine Zwischenkammer 10, die mithilfe der durch das Schwingungselement 7 erzeugten Vorspannung auf das Schiebeelement 8 bzw. die Hinterlager 6b ausgebildet wird (siehe hierzu auch die vergrößerte Ansicht in Fig. 2). Die Zwischenkammer 10 ist beispielsweise als Blockspalt und das Schiebeelement 8 beispielsweise als eine Schiebebuchse ausgebildet.

Die Spindelvorrichtung 1 umfasst im Gehäuse 2 eine Leitung 11 zum Zuführen von Luft. Die Leitung 11 umfasst eine Eingangsöffnung 11a, die an der Außenseite des Gehäuses 2 ausgebildet ist, und eine Ausgangsöffnung 11b, die zwischen dem Gehäuse 2 und dem Schiebeelement 8 ausgebildet ist. Die Leitung 11 umfasst einen ersten Leitungsabschnitt 11a1 im Bereich der Eingangsöffnung 11a und einen zweiten Leitungsabschnitt 11b1 im Bereich der Ausgangsöffnung 11b, wobei die beiden Leitungsabschnitte 11a1, 11b1 der Leitung 11 senkrecht zueinander ausgebildet sind.

An der Ausgangsöffnung 11b der Leitung 11 zwischen der Ausgangsöffnung 11b und dem Schiebeelement 8 umfasst die Spindelvorrichtung 1 eine Düse 12. Die Düse 12 hat eine Drosselgeometrie mittels der eine Durchflussmenge der zugeführten Luft reguliert wird. Die Luft wird über die Leitung 11 und die Düse 12 in die Zwischenkammer 10 geleitet. Die in die Zwischenkammer 10 zugeführte Luft ist in der Zwischenkammer 10 über die Abdichtungen 9 derart abgedichtet, dass die zugeführte Luft nicht über das Schiebeelement 8 entweichen kann.

Die Spindelvorrichtung 1 umfasst eine Sensoreinheit, die mit der Zwischenkammer 10 verbunden ist und dazu eingerichtet ist, einen in die Leitung 11 zugeführten Luftvolumenstrom zu detektieren. Die Sensoreinheit kann als ein Durchflussmesser ausgebildet sein, kann aber auch als jede andere beliebige Sensoreinheit ausgebildet sein, die einen Luftvolumenstrom und/oder einen Staudruck messen kann.

Die Sensoreinheit ist beispielsweise derart ausgebildet, dass die aus der im Gehäuse 2 angeordneten Leitung 11 zur Düse 12 und in die Zwischenkammer 10 strömende Luftänderung durch einen an der Drosselgeometrie entstehenden Staudruck mittels der Sensoreinheit detektiert wird.

An der Spindelvorrichtung 1 wird ein Werkzeug bzw. Werkstück durch die Zugstange 5 eingespannt. Wenn bei der Bearbeitung Zugkräfte auf das eingespannte Werkzeug bzw. Werkstück wirken, bewegt sich die Spindelwelle 3 in Richtung der Vorderlager 6a und das Schwingungselement 7 wird aus einem vorgespannten Zustand in einen Zustand versetzt, in dem das Schwingungselement 7 zusammengedrückt wird. Die Änderung aus dem vorgespannten Zustand zu dem Zustand, in dem das Schwingungselement 7 zusammengedrückt wird, wird als eine Änderung des Luftvolumenstroms mittels der Sensoreinheit detektiert. Die auf das Werkzeug bzw. Werkstück wirkende Zugkraft bewirkt eine Verschiebung der Spindelwelle 3, wodurch das Schiebeelement 8 in Richtung der Vorderlager 6a bewegt wird und die Zwischenkammer 10 dadurch ein kleineres Volumen als im vorgespannten Zustand hat. Diese Änderung der Zwischenkammer 10 wird bei der Sensoreinheit als eine Änderung des Luftvolumenstroms detektiert. Der von der Sensoreinheit detektierte Luftvolumenstrom wird dahingehend ausgewertet, um Überlasten bei der Bearbeitung vorzubeugen.

**Fig. 2** zeigt eine vergrößerte Ansicht eines Abschnitts der Spindelvorrichtung mit Überlastschutz aus Fig. 1 in einem Bereich um die Düse 12 zur Zuführung des Luftvolumenstroms in die Zwischenkammer 10.

**Fig. 3** zeigt ein Diagramm zu einem Ausführungsbeispiel gemäß der Erfindung. Das Diagramm zeigt auf einer horizontalen Achse die Größe der Zwischenkammer 10 als breite des Blockspalts. Auf der vertikalen Achse ist die Durchflussmenge von Luft aufgetragen, die durch die Leitung 11 über die Düse 12 zugeführt wird und von der Sensoreinheit detektiert wird.

Die horizontale Achse ist weiterhin in einen ersten Bereich A, der als "Normal" bezeichnet ist, einen zweiten Bereich B, der als "Kritisch" bezeichnet ist, und einen dritten Bereich C, der als "Überlast" bezeichnet ist, unterteilt.

Der erste Bereich A definiert einen ersten Zustand bei der Bearbeitung, in dem keine oder eine geringe Zugkraft auf die Spindelvorrichtung 1 wirkt, sodass keine bzw. eine minimale Änderung der Größe des Volumens der Zwischenkammer 10 auftritt und der durch die Sensoreinheit detektierte Durchflussstrom bei einem ausreichend großen Wert liegt. Der von der Sensoreinheit detektierte Durchflussstrom wird einem ersten Signal zugeordnet, das als normal interpretiert wird.

Der zweite Bereich B definiert einen zweiten Zustand bei der Bearbeitung, in dem eine Zugkraft auf die Spindelvorrichtung 1 wirkt, die größer als die im ersten Zustand wirkende Zugkraft ist. Das Volumen der Zwischenkammer 10 ist kleiner als die Größe des Volumens der Zwischenkammer 10 im ersten Zustand. Durch diese Verkleinerung des Volumens der Zwischenkammer 10 nimmt der Luftvolumenstrom ab und die Sensoreinheit detektiert im zweiten Zustand einen kleineren Wert als im ersten Zustand. Der von der Sensoreinheit detektierte Durchflussstrom wird einem zweiten Signal zugeordnet, das als kritisch interpretiert wird.

Der dritte Bereich C definiert einen dritten Zustand bei der Bearbeitung, in dem eine Zugkraft auf die Spindelvorrichtung 1 wirkt, die größer als die im ersten Zustand und im zweiten Zustand wirkende Zugkraft ist. Das Volumen der Zwischenkammer 10 ist kleiner als die Größe des Volumens der Zwischenkammer 10 im ersten Zustand und im zweiten Zustand. Durch diese Verkleinerung des Volumens der Zwischenkammer 10 nimmt der Luftvolumenstrom weiter ab und die Sensoreinheit detektiert im dritten Zustand einen kleineren Wert als im ersten Zustand und im zweiten Zustand. Der von der Sensoreinheit detektierte Durchflussstrom wird einem dritten Signal zugeordnet, das als Überlast interpretiert wird.

Durch den von der Sensoreinheit detektierten Luftvolumenstrom wird die Spindelvorrichtung 1 überwacht und Überlasten können frühzeitig detektiert werden, sodass auf Überlasten frühzeitig reagiert werden kann.

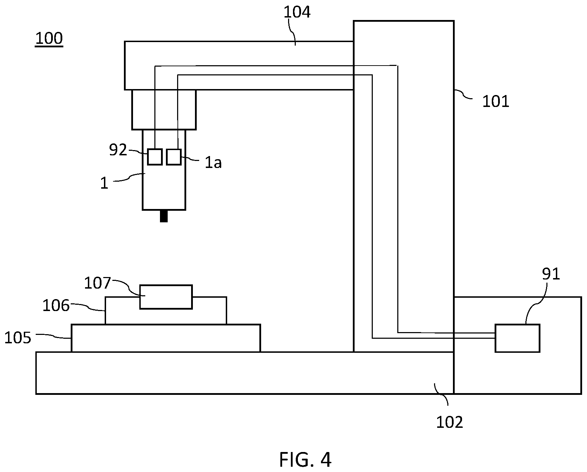

**Fig. 4** zeigt eine numerisch gesteuerte Werkzeugmaschine 100 mit einer erfindungsgemäßen Spindelvorrichtung 1, wobei an der Spindelvorrichtung 1 beispielsweise ein Werkzeug aufgenommen ist. Die Spindelvorrichtung 1 ist beispielsweise die Spindelvorrichtungen 1, die in der Fig. 1 dargestellt ist.

Die Werkzeugmaschine 100 umfasst ein Maschinenbett 102 und einen auf dem Maschinenbett 102 angeordneten Maschinenständer 101. Der Maschinenständer 101 kann beispielsweise auf dem Maschinenbett 102 in eineroderin mehreren Richtungen verfahrbar angeordnet sein. An dem Maschinenständer 101 ist ein Spindelvorrichtungsträger 104 angeordnet, der die Spindelvorrichtung 1 trägt. Der Spindelvorrichtungsträger 104 kann beispielsweise in einer oder in mehreren Richtungen verfahrbar sein. Die Spindelvorrichtung 1 wird durch einen Antrieb 1a angetrieben. Die Werkzeugmaschine 100 umfasst weiterhin einen Werkstücktisch 105, der auf dem Maschinenbett 102 angeordnet ist, mit einer Werkstückspanneinrichtung 106, in der ein Werkstück 107 eingespannt ist. Der Werkstücktisch 105 kann beispielsweise als ein Rundtisch oder als ein Schwenkrundtisch ausgebildet sein. Der Werkstücktisch 105 kann auf dem Maschinebett 102 in einer oder in mehreren Richtungen verfahrbar angeordnet sein.

Die Werkzeugmaschine 100 umfasst eine Steuereinrichtung 91, die dazu eingerichtet ist, dass die Spindelvorrichtung 1 eine Vorschubbewegung ausführt. Die Steuereinrichtung 91 steuert den Antrieb 1a der Spindelvorrichtung 1. Die Spindelvorrichtung 1 ist beispielsweise vertikal eingerichtet, kann aber auch horizontal oder in einem Winkel eingerichtet sein.

Die Spindelvorrichtung 1 umfasst eine Übertragungseinheit 92, die Signale an die Steuereinrichtung 91 der Werkzeugmaschine 100 überträgt. Die Übertragungseinheit 92 der Spindelvorrichtung 1 überträgt ein Signal, das die mittels der Sensoreinheit detektierte Änderung des Luftvolumenstroms angibt, an die Steuereinrichtung 91. Die Steuereinrichtung 91 der Werkzeugmaschine 100 empfängt das Signal und kann daraufhin die Bewegung der an der Werkzeugmaschine 100 aufgenommen Spindelvorrichtung 1 steuern bzw. regeln.

Wenn das erste Signal an der Sensoreinheit der Spindelvorrichtung 1 detektiert wird, bei dem keine Zugkraft bzw. eine minimale Zugkraft auf das an der Spindelvorrichtung 1 aufgenommen Werkzeug bzw. Werkstück wirkt und der Luftvolumenstrom einem normalen Wert entspricht, sodass keine oder minimale Änderung detektiert werden, wird das erste Signal über die Übertragungseinheit 92 an die Steuerungseinheit 91 übertragen und die Bewegung der an der Werkzeugmaschine 100 aufgenommene Spindelvorrichtung 1 bleibt aufgrund des von der Steuereinrichtungen 91 empfangenen ersten Signals unverändert.

Wenn das zweite Signal an der Sensoreinheit der Spindelvorrichtung 1 detektiert wird, bei dem eine größere Zugkraft als bei dem ersten Signal auf das an der Spindelvorrichtung 1 aufgenommen Werkzeug bzw. Werkstück wirkt und der Luftvolumenstrom einem kritischen Wert entspricht, wobei eine größere Änderung des Luftvolumenstroms als bei dem ersten Signal detektiert wird, wird das zweite Signal über die Übertragungseinheit 92 an die Steuerungseinheit 91 übertragen. Durch das empfangene zweite Signal kann für einen Benutzer der Werkzeugmaschine 100 an einer Anzeigevorrichtung der Werkzeugmaschine 100 eine Warnung angezeigt werden, die dem Benutzer darauf aufmerksam macht, dass eine für die Spindelvorrichtung 1 kritische Zugkraft auf das an der Spindelvorrichtung 1 aufgenommen Werkzeug bzw. Werkstück wirkt und basierend auf dem von der Steuereinrichtung 91 empfangenen ersten Signals können die Bewegung der an der Werkzeugmaschine 100 aufgenommene Spindelvorrichtung 1 und/oder die Drehzahl der Spindelwelle 3 und/oderdie Bewegung des Werkstücktisches 105 geändert werden.

Wenn das dritte Signal an der Sensoreinheit der Spindelvorrichtung 1 detektiert wird, bei dem eine größere Zugkraft als bei dem ersten Signal und dem zweiten Signal auf das an der Spindelvorrichtung 1 aufgenommen Werkzeug bzw. Werkstück wirkt und der Luftvolumenstrom einem "Überlast" Wert entspricht, wobei eine größere Änderung des Luftvolumenstroms als bei dem ersten Signal und dem zweiten Signal detektiert wird, wird das dritte Signal über die Übertragungseinheit 92 an die Steuerungseinheit 91 übertragen. Durch das empfangene dritte Signal kann für den Benutzer der Werkzeugmaschine 100 an der Anzeigevorrichtung der Werkzeugmaschine 100 eine Überlast angezeigt werden, die dem Benutzer darauf aufmerksam macht, dass eine für die Spindelvorrichtung 1 überlastende Zugkraft auf das an der Spindelvorrichtung 1 aufgenommen Werkzeug bzw. Werkstück wirkt. Die Bearbeitung mittels der an der Werkzeugmaschine 100 aufgenommenen Spindelvorrichtung 1 kann aufgrund des von der Steuereinrichtungen 91 empfangenen ersten Signals gestoppt und die Werkzeugmaschine 100 abgeschaltet werden.

Aufgrund der Steuerung der Werkzeugmaschine mittels der obigen Lösung können Überlasten auf einfacher und günstiger Weise verhindert werden.

Vorstehend wurden Beispiele bzw. Ausführungsbeispiele der vorliegenden Erfindung sowie deren Vorteile detailliert unter Bezugnahme auf die beigefügten Figuren beschrieben. Es sei erneut hervorgehoben, dass die vorliegende Erfindung jedoch in keiner Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

### Bezugszeichenliste

- **1**: **Spindelvorrichtung**
- **1a**: **Antrieb**
- **2**: **Gehäuse**
- **2a**: **erster Abschnitt**
- **2b**: **zweiter Abschnitt**
- **3**: **Spindelwelle**
- **4**: **Drehdurchführung**
- **5**: **Zugstange**
- **6a**: **Vorderlager**
- **6b**: **Hinterlager**
- **7**: **Schwingungselement**
- **8**: **Schiebeelement**
- **8a**: **Hauptabschnitt**
- **8b**: **Endabschnitt**
- **9**: **Abdichtungen**
- **10**: **Zwischenkammer**
- **11**: **Leitung**
- **11a**: **Eingangsöffnung**
- **11b**: **Ausgangsöffnung**
- **12**: **Düse**
- **91**: **Steuereinrichtung**
- **92**: **Übertragungseinheit**
- **100**: **Werkzeugmaschine**
- **101**: **Maschinenständer**
- **102**: **Maschinenbett**
- **104**: **Spindelvorrichtungsträger**
- **105**: **Werkstücktisch**
- **106**: **Werkstückspanneinrichtung**
- **107**: **Werkstück**

- **A**: **normaler Bereich**
- **B**: **kritischer Bereich**
- **C**: **Überlastbereich**

## Patentansprüche

1. Eine Spindelvorrichtung (1) mit einem Gehäuse (2) zum Einsatz an einer Werkzeugmaschine (100) umfassend:
- eine im Gehäuse (2) angeordnete Spindelwelle (3) zum Antreiben eines an der Spindelvorrichtung (1) eingespannten Werkzeugs und / oder Werkstücks; und
- eine zwischen dem Gehäuse (2) und der Spindelwelle (3) ausgebildete Zwischenkammer (10)
**gekennzeichnet durch**
eine mit der Zwischenkammer (10) verbundene Sensoreinheit, die eingerichtet ist, um
einen Volumenstrom eines in der Zwischenkammer (10) der Spindelvorrichtung (1) zugeführten Mediums zu erfassen, und
eine Änderung des Volumenstroms des Mediums in der Zwischenkammer (10) zur Überwachung vor Spindel- und/oder Werkzeugbeschädigungen bzw. Werkstückbeschädigung zu detektieren, wenn die Spindelwelle (3) durch eine auf das Werkzeug bzw. Werkstück und/oder der Spindelvorrichtung (1) wirkende Kraft verschoben wird.

2. Spindelvorrichtung (1) nach Anspruch 1, die im Gehäuse (2) angeordnete durch mindestens ein Schwingungselement (7) vorgespannte Lager (6a; 6b) umfasst.

3. Spindelvorrichtung (1) nach Anspruch 1 oder 2, wobei die Spindelvorrichtung (1) in einem ersten Abschnitt (2a) des Gehäuses (2) angeordnete durch ein erstes Schwingungselement vorgespannte Vorderlager (6a) und ein in einem zweiten Abschnitt (2b) des Gehäuses (2) angeordnete durch ein zweites Schwingungselement (7) vorgespannte Hinterlager (6b) umfasst.

4. Spindelvorrichtung (1) nach Anspruch 3, wobei die Spindelvorrichtung (1) ein zwischen dem Schwingungselement (7) und der Spindelwelle (3) angeordnetes Schiebeelement (8) umfasst, das eingerichtet ist, um eine Federkraft des Schwingungselements (7) zur Vorspannung der Hinterlager (6b) auf die Hinterlager (6b) zu übertragen.

5. Spindelvorrichtung (1) nach Anspruch 4, wobei das Schiebeelement (8) derart ausgebildet ist, dass die Hinterlager (6b) mindestens teilweise zum Schutz der Hinterlager (6b) von dem Schiebeelement (8) umschlossen sind.

6. Spindelvorrichtung (1) nach Anspruch 4 oder 5, wobei die Spindelvorrichtung (1) derart ausgebildet ist, dass, wenn bei der Bearbeitung Zugkräfte auf das eingespannte Werkzeug bzw. Werkstück wirken und sich die Spindelwelle (3) in Richtung der Vorderlager (6a) bewegt, das Schiebeelement (8) in Richtung der Vorderlager (6a) bewegt wird und die Zwischenkammer (10) ein kleineres Volumen als im vorgespannten Zustand einnimmt.

7. Spindelvorrichtung (1) nach Anspruch 6, wobei die Sensoreinheit derart eingerichtet ist, den Volumenstrom des der Zwischenkammer (10) der Spindelvorrichtung (1) zugeführten Mediums durch eine Durchflussmessung zu erfassen.

8. Spindelvorrichtung (1) nach einem der vorherigen Ansprüche, wobei die Spindelvorrichtung (1) weiterhin eine Düse (12) mit Drosselgeometrie umfasst und das Medium in einer im Gehäuse (2) angeordneten Leitung (11) zur Düse (12) strömt und die Sensoreinheit zur Durchflussmessung oder zur Messung eines an der Düse (12) anliegenden Staudrucks des der Zwischenkammer (10) der Spindelvorrichtung (1) zugeführten Mediums eingerichtet ist und damit auf den Volumenstrom rückschließt.

9. Spindelvorrichtung (1) nach einem der vorherigen Ansprüche, wobei die Sensoreinheit derart eingerichtet ist, dass eine Sicherheitsmaßnahme zum Schutz vor Spindel- und/oder Werkzeugbeschädigungen durchgeführt wird, wenn der Volumenstrom des Mediums einen vorbestimmten kritischen Wert erreicht.

10. Spindelvorrichtung (1) nach einem der vorherigen Ansprüche, wobei die Sensoreinheit derart eingerichtet ist, dass
ein erstes Signal detektiert wird, wenn der gemessene Volumenstrom des Mediums einen Wert annimmt, der in einem ersten Wertebereich (A) liegt,
ein zweites Signal detektiert wird, wenn dergemessene Volumenstrom des Mediums einen Wert annimmt, der in einem zweiten Wertebereich (B) liegt, und
ein drittes Signal detektiert wird, wenn der gemessene Volumenstrom des Mediums einen Wert annimmt, der in einem dritten Wertebereich (C) liegt,
wobei der dritte Wertebereich (C) in einem Bereich liegt, der kleiner als der erste (A) und zweite Wertbereich (B) ist, und
der zweite Wertebereich (B) in einem Bereich liegt, der kleiner als der erste (A) Wertebereich ist.

11. Spindelvorrichtung (1) nach Anspruch 10, wobei die Sensoreinheit derart eingerichtet ist, dass die Bearbeitung mittels der Werkzeugmaschine (100) durchgeführt wird, wenn die Sensoreinheit das erste Signal detektiert und/oder die Sensoreinheit derart eingerichtet ist, dass als eine Sicherheitsmaßnahme zum Schutz vor Spindel- und/oder Werkzeugbeschädigungen eine Warnung an der Werkzeugmaschine (100) erscheint, wenn die Sensoreinheit das zweite Signal oder das dritte Signal detektiert.

12. System umfassend:
- eine numerisch gesteuerte Werkzeugmaschine (100), und
- eine an der Werkzeugmaschine (100) aufgenommene Spindelvorrichtung (1) nach zumindest einem der vorstehenden Ansprüche.

13. System nach Anspruch 12, wobei
die Werkzeugmaschine (100) eine Steuereinrichtung (91) umfasst, die dazu eingerichtet ist, eine Bewegung der Spindelvorrichtung (1) und/oder eine Werkstücktischs (105) der Werkzeugmaschine (100) zu steuern, und
die Spindelvorrichtung (1) eine Übertragungseinheit (92) zum Übertragen von Signalen an die Steuereinrichtung (91) der Werkzeugmaschine (100) aufweist.

14. System nach Anspruch 13, wobei
die Übertragungseinheit (92) dazu eingerichtet ist, ein Signal an die Steuereinrichtung (91) der Werkzeugmaschine (100) zu übertragen, wobei das Regelungssignal die mittels der Sensoreinheit detektierte Änderung des Volumenstroms des Mediums angibt.

15. System nach Anspruch 14, wobei
die Steuereinrichtung (91) der Werkzeugmaschine (100) dazu eingerichtet ist, eine Bewegung der an der Werkzeugmaschine (100) aufgenommen Spindelvorrichtung (1) auf Grundlage des von der Übertragungseinheit (92) der Spindelvorrichtung (1) empfangenen Signals zu steuern bzw. zu regeln.
